# FASCICULE DE BREVET EUROPEEN

(11) **EP 1 484 983 B1**
(45) Date de publication et mention de la délivrance du brevet: **05.04.2006**
(21) Numéro de dépôt: 03727590.6
(22) Date de dépôt: 14.03.2003
(51) Int. Cl.: A23G 3/00, A23L 1/09, C13F 3/00

(54) **BASE ALIMENTAIRE SUCREE, SON PROCEDE DE PREPARATION ET UTILISATIONS.**
SÜSSES AUSGANGSMATERIAL FÜR NAHRUNGSMITTEL, VERFAHREN ZU SEINER HERSTELLUNG UND VERWENDUNGEN
SWEET FOOD BASE, THE PREPARATION METHOD THEREOF AND USES OF SAME

(30) Priorité: 19.03.2002 FR 0203363
(43) Date de publication de la demande: 15.12.2004
(73) Titulaire: Saint Louis Sucre, 75008 Paris (FR)
(72) Inventeur: SASIA, Guy, F-80400 EPPEVILLE (FR); DESCHAMPS, Didier, F-27550 NASSANDRES (FR)
(74) Mandataire: Goulard, Sophie
(86) Numéro de dépôt international: PCT/FR2003/000825
(87) Numéro de publication internationale: WO 2003/077669

(56) Documents cités:
- EP-A- 0 246 628
- WO-A-01/97632
- WO-A-92/04830
- US-A- 4 732 775
- POEL, SCHIWECK, SCHWARTZ: "Sugar Technology, Beet and cane manufacture" 1998 , VERLAG DR. ALBERT BARTENS KG , BERLIN XP002225663 tableau 20 page 974 -page 981

## Description

La présente invention est relative une base alimentaire sucrée sirupeuse, à son procédé de préparation, ainsi qu'à son utilisation à titre d'ingrédient alimentaire, notamment pour la fabrication de confiseries, pâtisseries, desserts lactés ou bien encore de plats aigres-doux.

La mélasse de sucrerie ou de raffinerie de canne à sucre est un sirop très visqueux incristallisable contenant environ 40 à 60 % de sucres sur poids brut, lesquels étant composés à environ 30 à 40 % de saccharose et de 10 à 20 % de sucres réducteurs. Lorsqu'elle provient de la canne à sucre, l'odeur de la mélasse provient de rappelle celle du rhum. Elle présente un goût rustique caractéristique, rappelant celui de la réglisse et un peu brûlé d'origine. De couleur presque noire, la mélasse a la propriété de colorer le mélange dans lequel on l'incorpore.

Grandement utilisée dans l'industrie agro-alimentaire, notamment dans la cuisine anglaise, une tradition remontant au temps des colonies, la mélasse se retrouve aussi sur la table écossaise dans la préparation des biscuits, dans le gâteau de mariage irlandais et aux Antilles pour sucrer les cocktails à base de rhum.

Elle est également largement utilisée dans l'élaboration de certaines boissons et de certaines confiseries telles que les bonbons à la mélasse, les bonbons à la réglisse comme les gommes et pâtes, les gélifiés, les bâtons, les torsades ou encore les rubans enroulés autour d'une confiserie de couleur.

La mélasse est le dernier jet issu des procédés de cristallisation du sucre. Compte tenu de la diversité des matières premières employées pour la fabrication de la mélasse (origines de la canne à sucre, conditions de culture et de récolte, traitements et engrais utilisés) et de la diversité des conditions dans lesquelles on extrait le sucre de la canne à sucre ou que l'on raffine le sucre roux, la composition de la mélasse de sucrerie varie dans de larges proportions qu'il est souvent difficile de contrôler.

De plus, la mélasse de sucrerie renferme de nombreuses impuretés (goudrons, métaux lourds, etc...) dont la présence est toujours à éviter dans les produits alimentaires destinés à la consommation.

EP-A-0 246 628 décrit une base alimentaire sucrée, caractérisée par le fait qu'elle contient, en poids sec par rapport au poids sec total de ladite base alimentaire : 1) saccharose (38%), 2) sucres réducteurs (47%), 3) caramel 4) reglisse (5%), 5) sel (4%). On mélange réglisse, sel, H₂O et saccharose (95°C, 5 minutes). Après on ajoute un sirop de glucose. Elle présente, un taux de matière sèche egal à 65%, une teneur de sucres totale supérieure à 50% et une viscosité maximum de 3000 cp.

C'est donc afin de remédier à l'ensemble des ces inconvénients que les Inventeurs se sont donnés pour but de pourvoir à un produit exempt d'impuretés, pouvant être utilisé en remplacement de la mélasse mais présentant toutes les caractéristiques des mélasses issues des procédés de raffinerie et dont la composition serait contrôlée tant du point de vue de la nature des différents ingrédients le composant que de ses caractéristiques physico-chimiques et organoleptiques.

La présente Invention a donc pour premier objet une base alimentaire sucrée, caractérisée par le fait qu'elle contient, en poids sec par rapport au poids sec total de ladite base alimentaire :
- de 45 à 83 % de saccharose (sucre liquide),
- de 3 à 22 % de sucres réducteurs (sucre inverti ou sirop de glucose),
- de 8 à 25 % de caramel,
- de 0,1 à 1,4 % de réglisse ou d'arôme de réglisse,
- de 0,5 à 1,5 % de sel,
et qu'elle présente un taux de matière sèche (MS) supérieur ou égal à 68 % en poids (brix), une teneur en sucres totaux supérieure ou égale à 50 % en poids sec et une viscosité comprise entre 1500 et 2500 Cps.

Les pourcentages indiqués ci-dessus en poids sec (% de matière sèche par rapport au poids total de matières sèches) correspondent aux pourcentages en poids brut final (non concentré) suivants :
- de 48 à 84 % de saccharose,
- de 2,9 à 20 % de sucres réducteurs,
- de 10 à 22 % de caramel,
- de 0,1 à 1,5 % de réglisse ou d'arôme de réglisse,
- de 0,4 à 1,4 % de sel.

Les valeurs de viscosité indiquées ci-dessus, ainsi que dans la suite de la description, sont données pour une mesure effectuée à une température de 40°C, à l'aide d'un viscosimètre de type Brookfield®, module n°3.

La base alimentaire conforme à l'Invention se présente sous la forme d'un sirop brun visqueux, sans bulle, sans mousse et sans dégagement gazeux, et dont le goût rappelle celui de la mélasse de canne à sucre ou de la réglisse.

Elle présente généralement un taux de cendres (à 600°C en double sulfatation) inférieur à 12 %, une conductivité à 0,1 % inférieure à 150 µs, un pH compris entre 5 et 7 et une acidité pour 100 g inférieure à 12 meq.

Elle présente l'avantage d'avoir une composition parfaitement définie et donc reproductible, et dont on peut garantir le degré de pureté.

L'activité en eau d'une telle base alimentaire est généralement comprise entre 60 et 70 % environ.

Le saccharose utilisé conformément à l'Invention est de préférence choisi parmi les sirops de saccharose présentant un brix supérieur à 68 % environ de MS, et encore plus particulièrement compris entre 68 et 80 % environ de MS et peut être réalisé à partir de saccharose sec. Le saccharose liquide est généralement obtenu en dissolvant du sucre cristallisé blanc dans de l'eau.

Selon une forme de réalisation avantageuse de l'Invention, le saccharose représente de préférence de 45 à 60 % environ en poids sec par rapport au poids du poids sec total de la base alimentaire.

On entend par sucre inverti, les mélanges de glucose et de fructose préparés à partir du saccharose. Le sucre inverti total est un mélange incristallisable ne renfermant que du glucose, du fructose et de l'eau, alors que le sucre inverti partiel renferme encore du saccharose.

Selon l'Invention, l'utilisation de sucre inverti ou de sirop de glucose permet d'apporter à la base alimentaire un agent anti-cristallisant, une source de coloration ultérieure pour la préparation des confiseries, ainsi qu'une charge sucrante.

Selon une forme de réalisation avantageuse de l'Invention, on préfère utiliser du sucre inverti total, dans une proportion comprise de préférence entre 9 et 19 % environ en poids sec par rapport au poids sec total de la base alimentaire.

Le caramel est de préférence choisi parmi les caramels liquides plus ou moins cuits (allant jusqu'aux caramels colorants), présentant un pH naturel (compris entre 2,3 et 2,9 environ) ou neutralisé (pH compris entre 6,5 et 8 environ).

Lorsque l'on utilise un ou plusieurs caramels neutralisés, leur pH est amené à la valeur désirée à l'aide d'un agent alcalinisant tel que la soude.

Ces caramels contiennent de préférence moins de 10 % environ de sucre inverti (sucres réducteurs).

Ces caramels permettent d'apporter la coloration brune de la base alimentaire conforme à l'Invention ainsi que des saveurs cuites. Ils jouent également un rôle anti-cristallisant car ils permettent d'augmenter la charge en saccharose de la base alimentaire sans risque de cristallisation.

Selon une forme de réalisation avantageuse de l'Invention, le caramel représente de 12 à 20 % environ en poids sec par rapport au poids sec total de la base alimentaire.

Selon une forme de réalisation avantageuse de l'Invention, l'arôme de réglisse peut être naturel ou artificiel. Cet arôme est de préférence naturel et peut par exemple être extrait des racines de *Glycyrrhiza glabra.*

Le sel présent dans la base alimentaire conforme à l'Invention est de préférence du chlorure de sodium.

Selon une forme avantageuse de l'Invention, la base alimentaire renferme en outre au moins un agent épaississant en une quantité comprise entre 0,05 et 7 % environ en poids sec par rapport au poids sec total de ladite base alimentaire. Cet agent épaississant est de préférence choisi parmi les amidons naturels ou modifiés tels que les amidons de blé, de pomme de terre ou de mais (fécules).

Ainsi qu'on l'a vu précédemment le taux de matière sèche d'une telle base alimentaire est supérieur ou égal à 68 %, de préférence compris entre 68 et 80 % environ.

Selon une forme de réalisation avantageuse de l'Invention, la teneur en sucres totaux est comprise entre 50 et 90 % environ en poids sec par rapport au poids sec total de la base alimentaire. La teneur en sucres totaux peut être déterminée selon des méthodes de dosage des sucres bien connues de l'homme de l'art, par exemple selon la méthode de Luff Schoorl (Méthode GS 4/3-9 ICUMSA, 1994).

La viscosité de la base alimentaire conforme à l'Invention est de préférence comprise entre 1800 et 2300 Cps environ.

Selon une forme de réalisation avantageuse de l'Invention, la base alimentaire peut également renfermer de la chicorée, afin de renforcer la couleur, le taux de matière sèche et l'amertume du produit.

A cet effet, on peut utiliser de la chicorée soluble, en concentré liquide, en concentré pâteux ou en grain.

Lorsqu'elle est utilisée, la chicorée représente de préférence de 0,05 à 8 % environ en poids sec par rapport au poids sec total de la base alimentaire.

Selon une autre forme de réalisation avantageuse de l'Invention, la base alimentaire peut également renfermer de la quinine, afin d'améliorer le goût, notamment l'amertume du produit final.

Lorsqu'elle est utilisée, la quinine représente de préférence de 0,01 à 0,1 % environ en poids sec par rapport au poids sec total de la base alimentaire.

En plus des ingrédients mentionnés ci-dessus, la base alimentaire conforme à l'Invention peut en outre renfermer un ou plusieurs ingrédients additionnels tels que du sucre blanc (en général de 15 à 20 % en poids) ; des colorants permettant de renforcer la couleur, tels que par exemple des colorants brun ou noir (en général de 0,01 à 0,1 % en poids par rapport au poids brut de la base alimentaire) ou bien encore des arômes tels que par exemple des arômes de sucre roux, de miel, de vanille, de café, de rhum, etc...(en général de 0,5 à 1,5 % en poids par rapport au poids brut de la base alimentaire), ou bien encore des agents humectants permettant de d'améliorer la stabilité du produit si nécessaire tels que par exemple de la glycérine ou du sorbitol.

La présente invention a également pour objet un procédé de préparation d'une telle base alimentaire caractérisé par le fait qu'il comprend les étapes suivantes :
a) la préparation d'une composition A présentant un taux de matière sèche supérieur ou égal à 68 brix par mélange de 70 à 95 % en poids sec de saccharose et de 5 à 30 % en poids sec de sucres réducteurs ;
b) l'addition dans ladite composition A, à une température comprise entre 45 et 70°C, de 12 à 20 % en poids sec de caramel et de 0,5 à 1,5 % en poids brut de réglisse ou d'arômes de réglisse.

Lorsque la base alimentaire conforme à l'Invention renferme du sucre blanc sec, celui est mélangé au sucre liquide de saccharose et aux sucres réducteurs lors de l'étape a).

Selon une forme de réalisation particulière de l'Invention, ce procédé de préparation comprend en outre, entre l'étape a) et l'étape b), une étape intermédiaire a') de cuisson de la composition A, de façon à former un caramel.

De façon préférée, cette étape de cuisson est réalisée en présence d'eau, à une température comprise entre 130 et 170°C environ, pendant une durée comprise entre 10 et 15 minutes environ.

Cette étape de cuisson est de préférence conduite simultanément à une étape d'évaporation sous vide, de façon à pouvoir ajuster le taux de matière sèche de la composition A qui sera ensuite utilisée lors de l'étape b) à la valeur désirée.

Lorsque la base alimentaire renferme des ingrédients supplémentaires tels que ceux décrits ci-dessus, ceux-ci sont incorporés à la composition A lors de l'étape b) ; l'ordre d'introduction de ces différents ingrédients n'étant pas critique.

L'étape b) est de préférence réalisée sous agitation, pendant une durée comprise entre 5 et 20 minutes environ.

La base alimentaire conforme à l'Invention peut avantageusement être utilisée à titre de substitut de la mélasse de canne à sucre, ce qui constitue un autre objet de l'Invention.

A ce titre, la base alimentaire conforme à l'Invention peut être utilisée à titre d'ingrédient alimentaire pour ou dans la préparation de confiseries, pâtisseries, desserts lactés, boissons ou bien encore de plats aigres-doux.

Outre les dispositions qui précèdent, l'invention comprend encore d'autres dispositions qui ressortiront de la description qui va suivre, qui se réfère à des exemples de préparation de bases alimentaires conformes à l'Invention.

### EXEMPLE 1 : PRÉPARATION D'UNE BASE ALIMENTAIRE DE TYPE CARAMEL, A HAUT BRIX, FAIBLEMENT COLORÉE

Dans un réacteur et sous agitation, on introduit 698 kg de sucre liquide à 67 brix et 109 kg de sucre inverti total à 74 brix. Ce mélange est porté à une température de 170°C, sous agitation, puis on y introduit 0,18 litre d'eau. La température est maintenue à 170°C, sous agitation, pendant environ 5 minutes, jusqu'à obtention d'un caramel à 75 brix (évaporation de l'eau).

Le caramel ainsi obtenu (729 kg) est refroidi jusqu'à une température de 50°C puis on y ajoute :
- 200 kg de caramel colorant contenant moins de 10 % de sucres réducteurs, neutralisé à un pH de 6,9,
- 0,5 kg de colorant noir,
- 10,5 kg d'arôme de réglisse liquide,
- 50 kg de fécule de pomme de terre, et
- 10 kg de chlorure de sodium.

On obtient ainsi un caramel faiblement coloré, à 80 brix, présentant des notes aromatiques de "brûlé" et d'amertume.

Ce caramel peut ensuit être incorporé dans une recette ou bien être utilisé pour la fabrication de confiseries, pâtisseries ou dans certaines boissons.

### EXEMPLE 2 : PRÉPARATION D'UNE BASE ALIMENTAIRE DE TYPE SIROP, A HAUT BRIX, FAIBLEMENT COLORÉE

Dans un réacteur et sous agitation, on introduit 392 kg de sucre liquide à 67 brix, 195 kg de sucre inverti total à 74 brix et 142 kg de sucre blanc sec. Après dissolution complète, ce mélange est porté à une température de 50°C, sous agitation, puis on y ajoute :
- 200 kg de caramel colorant contenant moins de 10 % de sucres réducteurs, neutralisé à un pH de 6,9,
- 0,5 kg de colorant noir,
- 10,5 d'arôme de réglisse en poudre,
- 50 kg de fécule de pomme de terre, et
- 10 kg de chlorure de sodium.

On obtient ainsi un sirop, à 80 brix, présentant des notes aromatiques de "brûlé" et d'amertume.

Ce sirop peut ensuit être incorporé dans certaines boissons ou être utilisé pour la fabrication de confiseries ou de pâtisseries.

### EXEMPLE 3 : PRÉPARATION D'UNE BASE ALIMENTAIRE DE TYPE SIROP, A HAUT BRIX ET COLORÉE

Dans un réacteur et sous agitation, on introduit 520 kg de sucre liquide à 67 brix et 130 kg de sucre inverti total à 74 brix. Ce mélange est évaporé sous vide jusqu'à obtention d'un brix compris entre 76 et 78.

La température de ce mélange est portée à 50°C puis on y ajoute, sous agitation :
- 200 kg de caramel colorant contenant moins de 10 % de sucres réducteurs, neutralisé à un pH de 6,9,
- 0,5 kg de colorant noir,
- 10,5 kg d'arôme de réglisse liquide,
- 50 kg de fécule de pomme de terre,
- 10 kg de chlorure de sodium et
- 80 kg de chicorée.

On obtient ainsi un sirop coloré, à 75-80 brix, présentant des notes aromatiques de "brûlé" et d'amertume.

Ce sirop peut ensuite être incorporé dans une recette ou bien être utilisé pour la fabrication de confiseries ou de pâtisseries, ou dans certaines boissons.

## Revendications

1. Base alimentaire sucrée, **caractérisée par le fait qu'**elle contient, en poids sec par rapport au poids sec total de ladite base alimentaire :
- de 45 à 83 % de saccharose,
- de 3 à 22 % de sucres réducteurs,
- de 8 à 25 % de caramel,
- de 0,1 à 1,4 % de réglisse ou d'arôme de réglisse,
- de 0,5 à 1,5 % de sel,
et qu'elle présente un taux de matière sèche supérieur ou égal à 68 % en poids (brix), une teneur en sucres totaux supérieure ou égale à 50 % en poids sec et une viscosité comprise entre 1500 et 2500 Cps.

2. Base alimentaire selon la revendication 1, **caractérisée par le fait que** le saccharose est choisi parmi les sirops de saccharose présentant un brix supérieur à 68 % de MS.

3. Base alimentaire selon la revendication 1 ou 2, **caractérisée par le fait que** le saccharose représente de préférence de 45 à 60 % en poids sec par rapport au poids sec total de la base alimentaire.

4. Base alimentaire selon l'une quelconque des revendications précédentes, **caractérisée par le fait que** le sucre inverti est du sucre inverti total.

5. Base alimentaire selon la revendication 4, **caractérisée par le fait que** le sucre inverti total représente de 9 à 19 % en poids sec par rapport au poids sec total de la base alimentaire.

6. Base alimentaire selon l'une quelconque des revendications précédentes, **caractérisée par le fait que** le caramel représente de 12 à 20 % en poids sec par rapport au poids sec total de la base alimentaire.

7. Base alimentaire selon l'une quelconque des revendications précédentes, **caractérisée par le fait qu'**elle renferme en outre au moins un agent épaississant en une quantité comprise entre 0,05 et 7 % en poids sec par rapport au poids sec total de la base alimentaire.

8. Base alimentaire selon la revendication 7, **caractérisée par le fait que** l'agent épaississant est choisi parmi les amidons de blé, de pomme de terre ou de

9. Base alimentaire selon l'une quelconque des revendications précédentes, **caractérisée par le fait qu'**elle présente un taux de matière sèche compris entre 68 et 80 %.

10. Base alimentaire selon l'une quelconque des revendications précédentes, **caractérisée par le fait que** la teneur en sucres totaux est comprise entre 50 et 90 % en poids sec par rapport au poids sec total de la base alimentaire.

11. Base alimentaire selon l'une quelconque des revendications précédentes, **caractérisée par le fait qu'**elle présente une viscosité comprise entre 1800 et 2300 Cps.

12. Base alimentaire selon l'une quelconque des revendications précédentes, **caractérisée par le fait qu'**elle renferme en outre de la chicorée, en une quantité comprise entre 0,05 et 8 % en poids sec par rapport au poids sec total de la base alimentaire.

13. Base alimentaire selon l'une quelconque des revendications précédentes, **caractérisée par le fait qu'**elle renferme en outre de la quinine, en une quantité comprise entre 0,01 et 0,1 % en poids sec par rapport au poids sec total de la base alimentaire.

14. Base alimentaire selon l'une quelconque des revendications précédentes, **caractérisée par le fait qu'**elle renferme en outre un ou plusieurs ingrédients additionnels choisis parmi le sucre blanc, les colorants, les arômes et les agents humectants.

15. Base alimentaire selon la revendication 14, **caractérisée par le fait que** les arômes sont choisis parmi les arômes de sucre roux, de miel, de vanille, de café et de rhum.

16. Procédé de préparation d'une base alimentaire telle que définie à l'une quelconque des revendications précédentes, **caractérisé par le fait qu'**il comprend les étapes suivantes :
a) la préparation d'une composition A présentant un taux de matière sèche supérieur ou égal à 68 brix par mélange de 70 à 95 % en poids sec de saccharose et de 5 à 30 % en poids sec de sucres réducteurs ;
b) l'addition dans ladite composition A, à une température comprise entre 45 et 70 °C, de 12 à 20 % en poids sec de caramel et de 0,5 à 1,5 % en poids brut de réglisse ou d'arôme de réglisse.

17. Procédé selon la revendication 16, **caractérisé par le fait qu'**il comprend en outre, entre l'étape a) et l'étape b), une étape intermédiaire a') de cuisson de la composition A, de façon à former un caramel.

18. Procédé selon la revendication 16 ou 17, **caractérisé par le fait que** l'étape b) est réalisée sous agitation, pendant une durée comprise entre 5 et 20 minutes.

19. Utilisation de la base alimentaire telle que définie à l'une quelconque des revendications 1 à 15, à titre de substitut de la mélasse de canne à sucre.

20. Utilisation de la base alimentaire telle que définie à l'une quelconque des revendications 1 à 15, à titre d'ingrédient alimentaire pour ou dans la préparation de confiseries, pâtisseries, desserts lactés, boissons ou de plats aigres-doux.

## Patentansprüche

1. Süße Nahrungsmittelgrundlage, **dadurch gekennzeichnet, daß** sie in Trockengewicht bezogen auf das Gesamttrockengewicht der Nahrungsmittelgrundlage:
- 45 bis 83 % Saccharose,
- 3 bis 22 % reduzierende Zucker,
- 8 bis 25 % Karamell,
- 0,1 bis 1,4 % Lakritze oder Lakritzaroma,
- 0,5 bis 1,5 % Salz
enthält und daß sie einen Trockenmassegehalt (MS) von größer oder gleich 68 Gew. -% (Brix), einen Gesamtzuckergehalt von größer oder gleich 50 % Trockengewicht und eine Viskosität von 1500 bis 2500 cps aufweist.

2. Nahrungsmittelgrundlage nach Anspruch 1, **dadurch gekennzeichnet, daß** die Saccharose aus Saccharosesirupen mit einem Brixwert von größer 68 % MS ausgewählt ist.

3. Nahrungsmittelgrundlage nach Anspruch 1 oder 2, **dadurch gekennzeichnet, daß** die Saccharose, bezogen auf das Gesamttrockengewicht der Nahrungsmittelgrundlage, vorzugsweise 45 bis 60 % Trockengewicht ausmacht.

4. Nahrungsmittelgrundlage nach irgendeinem der vorhergehenden Ansprüche, **dadurch gekennzeichnet, daß** der Invertzucker Gesamtinvertzucker ist.

5. Nahrungsmittelgrundlage nach Anspruch 4, **dadurch gekennzeichnet, daß** der Gesamtinvertzucker, bezogen auf das Gesamttrockengewicht der Nahrungsmittelgrundlage, 9 bis 19 % Trockengewicht ausmacht.

6. Nahrungsmittelgrundlage nach irgendeinem der vorhergehenden Ansprüche, **dadurch gekennzeichnet, daß** der Karamell, bezogen auf das Gesamttrockengewicht der Nahrungsmittelgrundlage, 12 bis 20 % Trockengewicht ausmacht.

7. Nahrungsmittelgrundlage nach irgendeinem der vorhergehenden Ansprüche, **dadurch gekennzeichnet, daß** sie ferner wenigstens ein Verdickungsmittel in einer Menge von 0,05 bis 7 % Trockengewicht enthält, bezogen auf das Gesamttrockengewicht der Nahrungsmittelgrundlage.

8. Nahrungsmittelgrundlage nach Anspruch 7, **dadurch gekennzeichnet, daß** das Verdickungsmittel aus Weizen-, Kartoffel- oder Maisstärke ausgewählt ist.

9. Nahrungsmittelgrundlage nach irgendeinem der vorhergehenden Ansprüche, **dadurch gekennzeichnet, daß** sie einen Trockenmassegehalt von 68 bis 80 % aufweist.

10. Nahrungsmittelgrundlage nach irgendeinem der vorhergehenden Ansprüche, **dadurch gekennzeichnet, daß** der Gesamtzuckergehalt, bezogen auf das Gesamttrockengewicht der Nahrungsmittelgrundlage, zwischen 50 und 90 % Trockengewicht liegt.

11. Nahrungsmittelgrundlage nach irgendeinem der vorhergehenden Ansprüche, **dadurch gekennzeichnet, daß** sie eine Viskosität von 1800 bis 2300 cps aufweist.

12. Nahrungsmittelgrundlage nach irgendeinem der vorhergehenden Ansprüche, **dadurch gekennzeichnet, daß** sie ferner Chicoree in einer Menge von 0,05 bis 5 % Trockengewicht enthält, bezogen auf das Gesamttrockengewicht der Nahrungsmittelgrundlage.

13. Nahrungsmittelgrundlage nach irgendeinem der vorhergehenden Ansprüche, **dadurch gekennzeichnet, daß** sie ferner Chinin in einer Menge von 0,01 bis 0,1 % Trockengewicht enthält, bezogen auf das Gesamttrockengewicht der Nahrungsmittelgrundlage.

14. Nahrungsmittelgrundlage nach irgendeinem der vorhergehenden Ansprüche, **dadurch gekennzeichnet, daß** sie ferner ein oder mehrere Zusatzstoffe enthält, die ausgewählt sind aus weißem Zucker, Farbstoffen, Aromastoffen und feuchthaltemitteln.

15. Nahrungsmittelgrundlage nach Anspruch 14, **dadurch gekennzeichnet, daß** die Aromastoffe aus Rohrzucker-, Honig-, Vanille-, Kaffee- und Rumaromen ausgewählt sind.

16. Verfahren zur Herstellung einer Nahrungsmittelgrundlage gemäß einem der vorhergehenden Ansprüche, **dadurch gekennzeichnet, daß** es die folgenden Schritte umfaßt:
a) Herstellung einer Zusammensetzung A mit einem Trockenmassegehalt von größer oder gleich 68 Brix pro Mischung aus 70 bis 95 % Trockengewicht Saccharose und 5 bis 30 % Trockengewicht reduzierende Zucker;
b) Zugabe von 12 bis 20 % Trockengewicht Karamell und 0,5 bis 1,5 % Bruttogewicht Lakritze oder Lakritzaroma zur Zusammensetzung A bei einer Temperatur zwischen 45 und 70°C.

17. Verfahren nach Anspruch 16, **dadurch gekennzeichnet, daß** es ferner zwischen Schritt a) und Schritt b) einen Zwischenschritt a') des Erhitzens der Zusammensetzung zur Bildung eines Karamells umfaßt.

18. Verfahren nach Anspruch 16 oder 17, **dadurch gekennzeichnet, daß** Schritt b) unter Rühren über einen Zeitraum von 5 bis 20 Minuten durchgeführt wird.

19. Verwendung der Nahrungsmittelgrundlage gemäß irgendeinem der Ansprüche 1 bis 15 als Ersatz für Zuckerrohrmelasse.

20. Verwendung der Nahrungsmittelgrundlage gemäß irgendeinem der Ansprüche 1 bis 15 als Nahrungsmittelzusatz zur oder bei der Herstellung von Süßwaren, Backwaren, Milchdesserts, Getränken oder süßsauren Gerichten.

## Claims

1. Sweet food base, **characterised in that** it contains, by dry weight relative to the total dry weight of said food base:
45 to 83 % of sucrose,
3 to 22 % of reducing sugars,
8 to 25 % of caramel,
0.1 to 1.4 % of liquorice or liquorice flavouring,
0.5 to 1.5 % of salt,
and **in that** it has a dry content greater than or equal to 68 % by weight (Brix), a total sugar content greater than or equal to 50 % by dry weight and a viscosity of between 1500 and 2500 cps.

2. Food base according to claim 1, **characterised in that** the sucrose is selected from among the sucrose syrups having a Brix of more than 68 % of dry matter.

3. Food base according to claim 1 or 2, **characterised in that** the sucrose preferably makes up from 45 to 60 % of dry weight, relative to the total dry weight of the food base.

4. Food base according to any one of the preceding claims, **characterised in that** the invert sugar is total invert sugar.

5. Food base according to claim 4, **characterised in that** the total invert sugar makes up 9 to 19 % of dry weight, relative to the total dry weight of the food base.

6. Food base according to any one of the preceding claims, **characterised in that** the caramel makes up 12 to 20 % of dry weight, relative to the total dry weight of the food base.

7. Food base according to any one of the preceding claims, **characterised in that** it further contains at least one thickener in an amount of between 0.05 and 7 % of dry weight, relative to the total dry weight of the food base.

8. Food base according to claim 7, **characterised in that** the thickener is selected from among wheat starch, potato starch and maize starch.

9. Food base according to any one of the preceding claims, **characterised in that** it has a dry content of between 68 and 80 %.

10. Food base according to any one of the preceding claims, **characterised in that** the total sugar content is between 50 and 90 % of dry weight, relative to the total dry weight of the food base.

11. Food base according to any one of the preceding claims, **characterised in that** it has a viscosity of between 1800 and 2300 cps.

12. Food base according to any one of the preceding claims, **characterised in that** it further contains chicory in an amount of between 0.05 and 8 % of dry weight, relative to the total dry weight of the food base.

13. Food base according to any one of the preceding claims, **characterised in that** it further contains quinine in an amount of between 0.01 and 0.1 % of dry weight, relative to the total dry weight of the food base.

14. Food base according to any one of the preceding claims, **characterised in that** it further contains one or more additional ingredients selected from among white sugar, colourings, flavourings and wetting agents.

15. Food base according to claim 14, **characterised in that** the flavourings are selected from among brown sugar, honey, vanilla, coffee and rum flavourings.

16. Method of preparing a food base as defined in any one of the preceding claims, **characterised in that** it comprises the following steps:
a) preparing a composition A containing an amount of dry matter greater than or equal to 68 Brix by mixing 70 to 95 % of dry weight of sucrose and 5 to 30 % of dry weight of reducing sugars;
b) adding to said composition A, at a temperature of between 45 and 70°C, 12 to 20 % of dry weight of caramel and 0.5 to 1.5 % of gross weight of liquorice or liquorice flavouring.

17. Method according to claim 16, **characterised in that** it further comprises, between step a) and step b), an intermediate step a') of cooking the composition A, so as to form a caramel.

18. Method according to claim 16 or 17, **characterised in that** step b) is carried out with stirring for a period of between 5 and 20 minutes.

19. Use of the food base as defined in any one of claims 1 to 15, as a substitute for sugar cane molasses.

20. Use of the food base as defined in any one of claims 1 to 15, as a food ingredient for or in the preparation of confectionery, cakes and pastries, dairy desserts, drinks or sweet and sour dishes.
